# EUROPÄISCHE PATENTANMELDUNG

(11) **EP 2 317 706 A2**
(43) Veröffentlichungstag der Anmeldung: **04.05.2011**
(21) Anmeldenummer: 10158530.5
(22) Anmeldetag: 30.03.2010
(51) Int. Cl.: H04L 12/58, H04M 1/725, H04M 3/533, H04L 29/08

(54) **Verfahren und Vorrichtung zur Übermittlung von Sprachnachrichten**

(30) Priorität: 31.10.2009 DE 202009014731 U; 14.12.2009 DE 202009016907 U
(71) Anmelder: Woizzer AG, 22765 Hamburg (DE)
(72) Erfinder: Fuchs, Heiko, 22765 Hamburg (DE)
(74) Vertreter: Birken, Lars

(57) **Zusammenfassung**

Die Erfindung betrifft ein Verfahren zum Empfangen, Verwalten und Versenden einer Mehrzahl von nutzerbezogenen Sprachdateien auf einem Servercomputer (50) mit den Verfahrensschritten: Empfangen eines nutzerbezogenen Sprachdateipakets (11,12,13) auf dem Servercomputer (50) von einem ersten Mobilgerät (10); Speichern des nutzerbezogenen Sprachdateipakets (51,52,53) auf dem Servercomputer (50); Empfangen eines Anforderungssignals, welches ein anforderndes charakterisierendes Merkmal, z.B. eine geographische Positionsangabe, enthält, auf dem Servercomputer von einem zweiten Mobilgerät (20), nach Erhalt des Anforderungssignals Versenden des nutzerbezogenen Sprachdateipakets von dem Servercomputer an das zweite Mobilgerät (20) zur Speicherung in einem Speicher dieses Mobilgeräts. Weiterhin enthält das Sprachdateipaket zumindest ein inhaltsbeschreibendes charakterisierendes Merkmal. Der Servercomputer wertet das inhaltsbeschreibende charakterisierende Merkmal aus und vergleicht es mit dem anfordernden charakterisierenden Merkmal. Das nutzerbezogene Sprachdateienpaket wird an das zweite Mobilgerät in Abhängigkeit des Ergebnisses der Auswertung und des Vergleichs des inhaltsbeschreibenden mit dem anfordernden charakterisierenden Merkmal versendet.

## Beschreibung

Die Erfindung betrifft ein Verfahren zum Empfangen, Verwalten und Versenden einer Mehrzahl von nutzerbezogenen Sprachdateien auf einem Servercomputer mit den Verfahrensschritten: Empfangen eines nutzerbezogenen Sprachdateipakets auf dem Servercomputer von einem ersten Mobilgerät, das zur Aufnahme von Sprache und zur Codierung der Sprache in eine Sprachdatei ausgebildet ist, wobei das Sprachdateipakt codierte akustische Sprachsignale enthält; Speichern des nutzerbezogenen Sprachdateipakets auf dem Servercomputer; Empfangen eines Anforderungssignals, welches ein anforderndes charakterisierendes Merkmal enthält, auf dem Servercomputer von einem zweiten Mobilgerät, nach Erhalt des Anforderungssignals Versenden des nutzerbezogenen Sprachdateipakets von dem Servercomputer an das zweite Mobilgerät zur Speicherung in einem Speicher dieses Mobilgeräts.

Grundsätzlich besteht in der heutigen Kommunikationstechnik eine Vielzahl von Möglichkeiten, um Informationen zwischen zwei oder mehr Personen auf größere Distanzen mit technischen Übertragungsmitteln auszutauschen. Dabei kann grundsätzlich unterschieden werden zwischen der privaten Kommunikation, die ausschließlich zwischen zwei Personen abläuft und für andere Personen nicht einsehbar ist und üblicherweise solcherart verläuft, dass von den jeweiligen beiden Personen genutzte Computer oder Mobilgerät, worunter in diesem Zusammenhang insbesondere drahtgebundene oder drahtlose Telefongeräte, insbesondere solche mit erweitertem Funktionsumfang wie einer Bilddarstellung und einer menügesteuerten Benutzerführung wie sogenannte Smartphones verstanden werden sollen, die Informationen versendet werden. In die Versendung sind dabei in der Regel Vermittlungsstellen eingebunden, so dass eine direkte Kommunikation zwischen zwei Mobilgeräten nicht stattfindet, sondern durch Einbindung von zentralen, miteinander kommunizierenden Vermittlungsstellen erfolgt. Andererseits haben sich eine Vielzahl von Plattformen gebildet, in welche eine Vielzahl von Benutzern persönliche Informationen und Nachrichten einspeisen können, die dann einem größeren Benutzerkreis zugänglich gemacht sind. Diese, überwiegend Internet-basierten Kommunikationsplattformen beruhen auf der Informationseinspeisung auf eine zentral und gemeinsam benutzte Plattform durch jeden einzelnen Benutzer von seinem persönlich genutzten Computer bzw. Mobilgerät.

Der überwiegende Anteil dieser technischen Lösungen zum Informationsaustausch, zur Informationseingabe, Verwaltung, Übermittlung und Ausgabe, ist textbasiert. D.h., die Informationen der Benutzer werden in Textform, typischerweise über eine Tastatur, eingegeben, als solche codiert und übermittelt und auch den Empfängern als solche angezeigt. Textbasierter Informationsaustausch hat den Vorteil, dass aufgrund der guten datentechnischen Codierung und Komprimierungsfähigkeit sehr geringe Datenvolumina übermittelt und gespeichert werden müssen und es aufgrund dieser Möglichkeiten in der Regel einen geeigneten Informationsaustausch darstellt, der keine Echtzeit-Teilnahme beider oder aller beteiligten Personen erfordert, sondern auch eine zeitversetzte Kommunikation ermöglicht, in welcher eine Nachricht formuliert und für den Adressaten hinterlassen wird, der diese zu einem späteren Zeitpunkt liest, dann darauf antwortet und seine Antwort wiederum beim ursprünglichen Absender der ersten Nachricht hinterlässt, damit dieser diese später lesen kann. Solcher textbasierter Informationsaustausch zwischen zwei oder mehr Personen hat sich beispielsweise als E-Mail, SMS, Chat, Twitter, Internetforum oder dgl. etabliert und findet heutzutage breite Anwendung, wobei die vorgenannten jeweiligen Umsetzungen des textbasierten Informationsaustausches auf teilweise unterschiedlichen technischen Lösungen beruhen.

Ein grundsätzlicher Nachteil an dem textbasierten Informationsaustausch ist die Notwendigkeit, die Information in einen Text zu fassen, wodurch auf Seiten des Absenders zusätzlicher Aufwand entsteht, und die Notwendigkeit, die Information als Text zu lesen, wodurch auf Seiten des Adressaten die Notwendigkeit entsteht, die Information durch Lesen aufzunehmen. In vielen Anwendungsfällen ist es hingegen wünschenswert, dass Informationen in sprachlicher Form ausgetauscht werden können, um einerseits die Geschwindigkeit der Informationseingabe durch den Absender zu erhöhen, andererseits die Möglichkeit beim Adressaten zu erzielen, die Information akustisch aufzunehmen.

Neben dem klassischen Telefonat, bei dem Absender und Adressat in Echtzeit miteinander kommunizieren, haben sich unterschiedliche technische Möglichkeiten etabliert, um Sprachinformationen auch für eine zeitversetzte Informationsweitergabe zu nutzen. So ist es einerseits bekannt, textbasierte Information in Sprachinformation umzusetzen, indem eine entsprechende Sprachumsetzung erfolgt, um textbasierte Information akustisch auszugeben. Dies ist beispielsweise als so genannte Sprach-SMS bekannt. Darüber hinaus ist es ebenfalls bekannt, mittels Spracherkennungsroutinen sprachlich eingegebene Informationen in textbasierte Informationen umzucodieren, um auf diese Weise aus dem gesprochenen Wort einen Text zu erzeugen. All diese Vorgehensweisen beruhen auf dem Grundsatz, in einem Eingabegerät des Absenders eine Umcodierung in textbasierte Information vorzunehmen oder auf einem Ausgabegerät des Adressaten eine Umcodierung aus textbasierter Information in Sprachinformation vorzunehmen, um auf diesem Weg den Austausch textbasierter Informationen beizubehalten. Nachteilig an diesem Verfahren ist es, dass sowohl auf Absender- wie auch auf Adressatenseite erhebliche und zeitverzögernde Codierungs- und Decodierungsmaßnahmen erfordert und darüber hinaus aufgrund der Individualität der menschlichen Sprache in der Regel Fehlinterpretationen in der Codierung aus Sprache in Text und Fehlbetonungen in der Codierung aus Text in Sprache unvermeidbar macht. Diese Art und Weise der sprachlichen Informationsein- und -ausgabe wird für den Austausch von Informationen daher von vielen Nutzern als technisch unzulänglich und schlecht handhabbar empfunden.

Es ist weiterhin bekannt, sprachbasierte Informationen zwischen zwei Benutzern auszutauschen, indem eine Sprachnachricht unmittelbar vom Absender für den Empfänger platziert und hinterlassen wird. Diese, als Anrufbeantworter-, Mailbox- oder Voice-Mail-Funktion bekannte Informationsweise beruht auf der unmittelbaren Versendung von Sprachnachrichten, d.h. diese Sprachnachrichten werden zum Zwecke der Versendung nicht in eine textbasierte Form codiert und anschließend wiederum decodiert und macht sich die Speicherung dieser Sprachnachrichten auf einer Vermittlungseinrichtung zunutze. Nachteilig an dieser Art des Informationsaustausches ist es, dass die Kommunikation in der Regel nur ausgebildet ist, um zwischen genau zwei Personen stattzufinden und dass die technischen Möglichkeiten, die solcherart ausgetauschten Informationen dem Adressaten zugänglich zu machen, begrenzt sind. So ist es einerseits in der Regel nur möglich, die solcherart platzierten Sprachnachrichten in chronologischer Weise abzuhören, wahlweise einzelne dieser Sprachnachrichten zu löschen oder zu speichern oder erneut anzuhören. Des Weiteren ermöglicht diese Art der Kommunikation es dem Absender nicht, die Sprachnachricht zu einem Zeitpunkt zu erstellen, zu dem keine Übermittlung an die Vermittlungseinrichtung möglich ist, d.h. die Sprachnachricht kann weder vor ihrer Versendung nochmals kontrolliert werden noch kann sie in einem Offline-Modus erstellt werden. Ebensowenig besteht die Möglichkeit, dass der Adressat die Sprachnachricht in einem Offline-Modus abhört.

Grundsätzlich besteht in technischer Hinsicht ein zentraler Unterschied zwischen der Verwendung von Sprachnachrichten und der Verwendung von Textnachrichten darin, dass Textnachrichten ein beträchtlich geringeres Datenvolumen umfassen als Sprachnachrichten. So lässt sich ein geschriebener Satz auf ein um Größenordnung niedrigeres Datenvolumen komprimieren und in dieser Form versenden als derselbe gesprochene Satz als Sprachnachricht. Dies hat aus technischer Hinsicht zur Folge, dass einerseits technisch spezifische Lösungen für die Versendung von Sprachnachrichten gegenüber Textnachrichten wünschenswert sind, um die übertragenen Datenvolumina an diese Umstände anzupassen. Darüber hinaus ergeben sich aber auch auf den benutzten Sende- und Empfangsgeräten hieraus resultierende technische Problemstellungen, die darin liegen, dass Sprachnachrichten nicht in beliebigem Umfang gespeichert werden können, da hierdurch bei Nutzung über einen längeren Nutzungszeitraum das zur Verfügung stehende Speichervolumen durch das hiervon eingenommene Speichervolumen in einer belastenden Weise ausgenutzt und möglicherweise überlastet würde.

Bei der sprachbasierten Informationsübermittlung ergibt sich ein weiteres technisches Problem, welches aus dem Nutzungsverhalten herrührt, wenn ein Absender oder Adressat eine Vielzahl von Sprachnachrichten auf seinem Gerät versendet oder empfängt und darauf zugreifen möchte. Während es nämlich grundsätzlich möglich ist, eine Mehrzahl von textbasierten Informationen parallel darzustellen, beispielsweise indem eine Listung aller textbasierten Informationspakete auf einem Bildschirm dargestellt wird, gegebenenfalls nur unter Verwendung der ersten zehn Wörter jedes textbasierten Informationspaketes, ist es derzeit nicht möglich, eine solche Parallelausgabe sprachbasierter Informationen in einer für den Menschen verständlichen Weise zu präsentieren. Stattdessen ist es stets erforderlich, sprachbasierte Informationen in einer zeitlich aufeinander folgenden Weise darzustellen, da eine Paralleldarstellung zwar technisch möglich, für den Menschen aber unverständlich wäre. Dieser besondere Umstand, der aus der unterschiedlichen Informationsaufnahme durch das menschliche Auge und das menschliche Ohr resultiert, erfordert eine grundsätzlich andere Art der Verwaltung von Sprachnachrichten, wenn angestrebt wird, Mittel zur effizienten Auswahl bestimmter Sprachnachrichten bereitzustellen.

Schließlich besteht eine weitere spezifische Problematik in der Nutzung von sprachbasierten Informationen und deren Weitergabe darin, dass diese Art von Informationsaustausch in technischer Weise für die Kommunikation zwischen genau zwei Personen umsetzbar ist, es allerdings an geeigneten Informationsübermittlungswegen und Informationsverwaltungsmitteln fehlt, um auch sprachbasierte Informationen von einer Person an eine Mehrzahl von Personen zu versenden und diesen zugänglich zu machen oder sprachbasierte Informationen, die von mehreren Quellen stammen, einer einzelnen Person zugänglich zu machen.

Der Erfindung liegt die Aufgabe zugrunde, ein Verfahren bereitzustellen, welches die oben genannten Probleme überwindet und ein Verfahren zur sprachbasierten Informationsübermittlung und -verwaltung bereitzustellen, mit dem eine effiziente Erstellung, Versendung, Verwaltung und Ausgabe von Sprachnachrichten ermöglicht wird.

Diese Aufgabe wird erfindungsgemäß gelöst, indem das Sprachdateipaket weiterhin zumindest ein inhaltsbeschreibendes charakterisierendes Merkmal enthält, der Servercomputer das inhaltsbeschreibende charakterisierende Merkmal auswertet und mit dem anfordernden charakterisierenden Merkmal vergleicht, und das nutzerbezogene Sprachdateienpaket an das zweite Mobilgerät in Abhängigkeit des Ergebnisses der Auswertung und des Vergleichs des inhaltsbeschreibenden mit dem anfordernden charakterisierenden Merkmal versendet wird.

Mit dem erfindungsgemäßen Verfahren wird eine effiziente Möglichkeit der Versendung und Verwaltung von Sprachnachrichten bereitgestellt, welche einerseits die spezifischen Umstände, welche sich in technischer Hinsicht aufgrund des erhöhten Datenvolumens von Sprachnachrichten ergeben, andererseits die spezifischen Umstände, die sich aufgrund der unterschiedlichen technischen Möglichkeiten zur Darstellung, Auswahl und Verwaltung von Sprachnachrichten ergeben, in vorteilhafter Weise berücksichtigt. Grundlegender Kern des erfindungsgemäßen Verfahrens ist dabei, dass jede Sprachnachricht in Form einer Sprachdatei gespeichert und in ein Sprachdateipaket eingeschlossen wird, welches weitere Informationen enthält, darunter insbesondere zumindest ein inhaltsbeschreibendes charakterisierendes Merkmal. Anhand dieses inhaltsbeschreibenden, charakterisierenden Merkmals wird dann ein Vergleich dieses Merkmals mit einem anfordernden charakterisierenden Merkmal getroffen, um auf diese Weise eine Sprachnachricht einer gezielten Auswahl und Verwaltung zugänglich zu machen. Dabei ist zu verstehen, dass sowohl das inhaltsbeschreibende als auch das anfordernde charakterisierende Merkmal nach der erfindungsgemäßen Weise nicht mit den intrinsisch bedingten Abfrageumständen gleich und zu verwechseln sind, also insbesondere nicht als inhaltsbeschreibendes oder anforderndes charakterisierendes Merkmal die Eigenschaft zu verstehen ist, dass sich die Sprachnachricht an den Adressaten wendet oder durch den Adressaten abgerufen wird, also nicht der Adressat selbst als charakterisierendes Merkmal zur Durchführung des Vergleichs alleinig dienen kann. Vielmehr ist erfindungsgemäß vorgesehen, eine inhaltsbezogene charakterisierende Merkmalsangabe dem Sprachdateienpaket hinzuzufügen. Unter einer solchen inhaltsbezogenen Angabe kann beispielsweise das Erstellungsdatum verstanden werden, alternativ oder zusätzlich aber auch eine geographische Angabe über eine geographische Position oder Region, auf die sich die Sprachnachricht bezieht, eine Kategorie, unter welche der Inhalt der Sprachnachricht fällt, ein Thema, zu welchem sich der Inhalt der Sprachnachricht verhält, der Absender, welcher die Sprachnachricht erstellt hat und dgl. Mit dem erfindungsgemäßen Verfahren wird es somit in vorteilhafter Weise möglich, sprachbasierte Nachrichten zwischen mehreren Nutzern auszutauschen und diese dabei in solcher Weise zu verwalten, dass lediglich bestimmte, den spezifischen Bedürfnissen entsprechende Sprachnachrichten versendet und empfangen werden, welche durch eine entsprechende Auswahl anhand eines charakterisierenden anfordernden Merkmals und dessen Vergleich mit einem dem Sprachdateipaket zugeordneten inhaltsbeschreibenden Merkmal versendet und empfangen werden. Mit dem erfindungsgemäßen Verfahren wird daher einerseits das zu versendende Datenvolumen in signifikanter Weise reduziert, da nicht mehr automatisch alle an einen Adressaten gerichtete Sprachdateien versendet werden, ohne dass der Adressat hierfür den Sendevorgang gezielt abbrechen müsste und andererseits die Speicherkapazität auf einem Empfangsgerät, welche für die Sprachnachrichten erforderlich ist, begrenzt, ohne dass hierzu manuelle oder selektiv automatische Löschungsvorgänge erforderlich wären.

Das erfindungsgemäße Verfahren ermöglicht es darüber hinaus, Sprachdateien in solcher Weise zu verwalten und zu versenden, dass einerseits eine von einem Benutzer erstellte Sprachnachricht von mehreren Benutzern empfangen und gehört werden kann, indem sich das erfindungsgemäße Verfahren von der reinen Absender-Adressat-Kopplung löst und stattdessen eine Verwaltung und eine Versendung von Sprachnachrichten nach einem inhaltsbezogenen charakterisierenden Merkmal ermöglicht. Darüber hinaus können auch mehrere Sprachnachrichten, die von unterschiedlichen Personen erstellt worden sind, sich jedoch inhaltlich auf ein übereinstimmendes charakterisierendes Merkmal beziehen, von einer einzigen Person komfortabel zugegriffen werden, indem eine technische Verwaltungs- und Versendemöglichkeit bereitgestellt wird, die eine entsprechende Zuordnung solcher mehrerer Sprachnachrichten zu einem inhaltlichen Thema unabhängig von der Frage, wer die Sprachnachricht erstellt, versendet hat und wer diese Sprachnachricht empfangen möchte und sie folglich abfragt, bereitgestellt wird.

Ein weiterer Aspekt der Erfindung ist ein Verfahren zum Aufnehmen, Verwalten und Ausgeben einer Mehrzahl von Sprachdateien auf einem Mobilgerät, mit den Verfahrensschritten:
a) Erstellen von individuellen Sprachdateipaketen mittels:
   Aufnehmen einer individuellen Sprachdatei mittels einer Aufnahmeschnittstelle auf dem Mobilgerät;
   Zuordnen eines inhaltsbezogenen charakterisierenden Merkmals zu der Sprachdatei,
   Erstellen eines individuellen Sprachdateipakets aus der individuellen Sprachdatei und dem inhaltsbezogenen charakterisierenden Merkmal auf dem Mobilgerät, und
   Versenden des individuellen Sprachdateipakets von dem Mobilgerät an den Servercomputer; und
b) Ausgeben von Sprachdateipaketen mittels:
   Senden eines anfordernden charakterisierenden Merkmals von dem Mobilgerät an einen Servercomputer;
   Empfangen einer Mehrzahl von Sprachdateipaketen auf dem Mobilgerät von einem Servercomputer, wobei jedes Sprachdateipaket eine Sprachdatei und ein dem anfordernden charakterisierenden Merkmal zugeordnetes inhaltsbeschreibendes charakterisierendes Merkmal enthält;
   Speichern der Mehrzahl von Sprachdateipaketen in einem Speicher des Mobilgeräts;
   Einspeisen eines ausgabebezogenen charakterisierenden Merkmals in das Mobilgerät;
   Auswerten des inhaltsbezogenen charakterisierenden Merkmals auf dem Mobilgerät und
   Erstellen einer Reihenfolge der Mehrzahl von Sprachdateipaketen anhand eines Vergleichs des inhaltsbezogenen charakterisierenden Merkmals mit dem ausgabebezogenen charakterisierenden Merkmal auf dem Mobilgerät;
   Zeitlich aufeinander folgendes Wiedergeben der Sprachdateien der Mehrzahl von Sprachdateipaketen in der erstellten Reihenfolge über eine akustische Ausgabevorrichtung des Mobilgeräts.

Während mit dem zuvor erläuterten erfindungsgemäßen Verfahren eine spezifische Art der Auswahl von zu versendenden Sprachdateien auf einem Servercomputer beschrieben wird und hierdurch einerseits die Problematik der zu transferierenden Datenvolumina, andererseits die Problematik der zu speichernden Datenvolumina auf den Empfangsgeräten in spezifischer Weise adressiert wird, wird mit diesem Aspekt der Erfindung ein Verfahren bereitgestellt, welches sich insbesondere mit der Erstellung und Ausgabe von Sprachdateien auf einem Mobilgerät befasst und hierbei in eben gleicher Weise die Problematik der Begrenzung des Speichervolumens und des empfangenen Datenvolumens adressiert und mittels eines Abgleichs inhaltsbezogener charakterisierender Merkmale der Sprachdateipakete mit einem ausgabebezogenen charakterisierenden Merkmal löst. Darüber hinaus wird mit diesem Aspekt der Erfindung ein Verfahren bereitgestellt, welches eine Möglichkeit beinhaltet, unter einer Vielzahl von auf einem Mobilgerät gespeicherten Sprachnachrichten auf bestimmte Sprachnachrichten zwecks deren Ausgabe zuzugreifen, indem eine entsprechende Sortierungsfolge bereitgestellt wird. Dabei kann dieser Zugriff einerseits durch eine Benutzereingabe über eine Benutzerschnittstelle erfolgen, andererseits auch über unmittelbar aus in dem Mobilgerät generierten charakterisierenden Merkmalen, die ausgabebezogen sind, erzeugt werden. So kann beispielsweise aus einer in das Mobilgerät integrierten Uhr ein Zeitpunkt als ausgabebezogenes Merkmal festgelegt sein, zu dem dann gegebenenfalls durch weitere charakterisierende Merkmale ausgewählte Sprachnachrichten ausgegeben werden. Des Weiteren kann aus einer in das Mobilgerät integrierten Positionsbestimmungseinheit eine geographische Position als ausgabebezogenes Merkmal herangezogen werden, um bei Erreichen dieser geographischen Position oder einer bestimmten Mindestannäherung hieran einen Ausgabevorgang einer bestimmten Sprachnachricht oder bestimmter Sprachnachrichten auszuführen.

Die solcherart auf dem Mobilgerät erstellten Sprachdateienpakete können dann an einen Servercomputer versendet werden. Hierbei wird für den Versand und Empfang vorzugsweise eine drahtlose Übertragung über ein Mobilfunknetz, wie beispielsweise UMTS oder EDGE eingesetzt oder WLAN eingesetzt.

Dabei besteht die Besonderheit des Verfahrens darin, dass Sprachdatenpakete, welche an eine solche geographische Position inhaltlich geknüpft sind, von anderen Mobilgeräten aus zuvor erstellt und versendet worden sein müssen, und dass des Weiteren das diese Sprachnachricht ausgebende Mobilgerät diese Sprachnachricht abgerufen und gespeichert haben muss, um die Ausgabe durchzuführen. Eine weitere Besonderheit liegt darin, dass es mittels des erfindungsgemäßen Verfahrens möglich ist, eine solche ortsbezogene Sprachdatei zwischen genau zwei Mobilgeräten auszutauschen, so dass individuelle, ortsbezogene Nachrichten ausgetauscht werden können.

Erfindungsgemäß ist hierbei, ebenso wie bei dem zuvor erläuterten Verfahren, insbesondere vorgesehen, dass der Vergleich zwischen inhaltsbezogenen charakterisierenden Merkmalen und anfordernden bzw. ausgabebezogenen charakterisierenden Merkmalen auf Grundlage einer Kombination mehrerer zu vergleichender Merkmale erfolgt. So ist es beispielsweise möglich, eine Auswahl nach den Kriterien Absender, Erstellungszeitpunkt und geographischer Position zu wählen, um nur solche Sprachnachrichten abzuhören, die von einem bestimmten Absender erstellt worden sind, eine bestimmte Aktualität haben und sich auf einen bestimmten Ort oder Umkreis um einen Ort beziehen.

Gemäß einer ersten bevorzugten Ausführungsform ist vorgesehen, dass als anforderndes und/oder als ausgabebezogenes charakterisierendes Merkmal eine geographische Positionsangabe über eine Benutzerschnittstelle des Mobilgeräts eingegeben wird oder mittels einer geographischen Positionsbestimmungsvorrichtung des Mobilgeräts ermittelt wird, das inhaltliche charakterisierende Merkmal von Sprachdateipaketen, die auf dem Servercomputer gespeichert bzw. von diesem empfangen werden, eine geographische Positionsangabe darstellt; die Sprachdateipakete an das Mobilgerät übertragen bzw. auf dem Mobilgerät akustisch wiedergegeben werden, wenn eine vordefinierte Distanz zwischen der geographischen Positionsangabe des anfordernden bzw. ausgabebezogenen charakterisierenden Merkmals und der geographischen Positionsangabe des inhaltlich charakterisierenden Merkmals des jeweiligen Sprachdateipakets unterschritten wird. Mit dieser Fortbildungsform ist es möglich, zwischen zwei Mobilgeräten Sprachnachrichten auszutauschen und diese in Abhängigkeit der Annäherung des adressierten Mobilgeräts an eine geographische Position auf diesem auszugeben. So können beispielsweise individuelle Nachrichten unter der Bedingung weitergegeben werden, dass der Adressat den nachrichtsbezogenen Ort mit seinem Mobilgerät erreicht, beispielsweise um eine Hotelempfehlung, eine Verkehrswarnung, eine an die eigene Wohnstätte geknüpfte Sprachnachricht oder dgl. zu versenden und zeitversetzt beim Empfänger ortsabhängig ausgeben zu lassen. Dabei kann vorgesehen sein, dass das versendende und die Sprachnachricht erstellende Mobilgerät die hierzu erforderliche Positionsangabe entweder aus einem lokalen Positionssensor innerhalb des Mobilgeräts selbst erstellt und folglich den Erstellungsort als inhaltsbezogenes charakterisierendes Merkmal hinzufügt oder dass diese inhaltsbezogene charakterisierende Positionsangabe durch eine Benutzereingabe dem Sprachdateipaket hinzugefügt wird, so dass auch Sprachnachrichten erstellt werden können, die sich auf Orte beziehen, an denen sich das die Sprachnachricht erstellende Mobilgerät zum Zeitpunkt der Erstellung nicht befindet.

Dabei ist es weiterhin bevorzugt, wenn ein Umgebungsbereich über eine graphische Wiedergabeeinheit des Mobilgeräts ausgegeben wird; die Größe des ausgegebenen Umgebungsbereichs über eine Benutzerschnittstelle skalierbar ist; und alle Sprachdateipakete an das Mobilgerät übertragen bzw. auf dem Mobilgerät akustisch wiedergegeben werden, deren geographische Positionsangabe des inhaltlich charakterisierenden Merkmals des jeweiligen Sprachdateipakets innerhalb des solcherart skaliert ausgegebenen Umgebungsbereichs liegt, wobei vorzugsweise die Sprachdateipakete in ihrer aufsteigenden Distanz von der geographischen Positionsangabe, die über die Benutzerschnittstelle des Mobilgeräts eingegeben wurde oder mittels der geographischen Positionsbestimmungsvorrichtung des Mobilgeräts ermittelt wurde, in eine Reihenfolge sortiert werden, und in dieser Reihenfolge übertragen bzw. wiedergegeben werden. Diese spezifische Ausführungsform adressiert im speziellen die Problematik der relevanzsortierten Ausgabe von geographisch bezogenen Sprachnachrichten. Grundsätzlich ist es für einen Benutzer beispielsweise in Abhängigkeit der von ihm nachgesuchten Information, teilweise aber auch in Abhängigkeit des von ihm benutzten Verkehrsmittels in sehr unterschiedlicher Weise interessant, positionsbezogene Nachrichten aus seinem näheren oder weiteren Umkreis zu erhalten. Die Bereitstellung von Sprachnachrichten stellt hier aufgrund der zuvor erläuterten schlechten Paralleldarstellbarkeit eine besondere Problematik dar. Erfindungsgemäß wird hierbei der Weg beschritten, die Verfügbarkeit positionsbezogener Sprachnachrichten auf einer graphischen Ausgabeeinheit darzustellen und hierbei dem Benutzer durch Auswahl eines Fensters bei dieser Darstellung es zu ermöglichen, den für ihn relevanten geographischen Bereich, aus dem Sprachnachrichten wiedergegeben werden sollen, auszuwählen. Nachdem diese graphische Auswahl getroffen wurde, können die hierzu relevanten Sprachnachrichten in den Speicher des benutzten Mobilgeräts geladen werden bzw. aus diesem Speicher ausgegeben werden.

Die Reihenfolge wird hierbei insbesondere in solcher Weise erstellt, dass solche Sprachnachrichten, die die kürzeste Distanz zu der Position des Mobilgeräts selbst oder einer vorab bestimmten Position aufweisen, zuerst ausgegeben werden und dann aufsteigend Sprachnachrichten wiedergegeben werden, die weiter dieser Position entfernt sind. Alternativ oder zusätzlich hierzu können jedoch auch andere Kriterien als Reihensortierung herangezogen werden, beispielsweise eine Sterne-Klassifizierung von Hotels, um in solcher Weise zunächst Sprachnachrichten zu 5-Sterne-Hotels aus dem ausgewählten Umgebungsbereich wiederzugeben, hierauf folgend Sprachnachrichten zu 4-Sterne-Hotels usw.

Es ist weiterhin bevorzugt, dass einem Sprachdateipaket weiterhin ein Rangwert zugeordnet wird, der berechnet wird, indem aus folgenden Faktoren: der seit dem Erstellungszeitpunkt der Sprachnachricht vergangenen Zeitspanne, der Anzahl der Speichervorgänge, mit denen das Sprachdateipaket auf weiteren Mobilgeräten nach Abrufen des Sprachdateipakets gespeichert wurde, der Anzahl der Weiterleitungsvorgänge, mit denen das Sprachdateienpaket durch ein Mobilgerät an ein anderes Mobilgerät gesendet wurde, ein dem Absender des Sprachdateipakets zugeordneter persönlicher Rangfaktor, welcher sich aus der Höhe der Rangwerte der bisher von diesem Absender erstellten Sprachdateienpakete errechnet, und dass zumindest zwei dieser Faktoren, vorzugsweise drei oder alle vier Faktoren in einer vorbestimmten Gewichtung zueinander addiert werden, und dass eine Reihenfolge oder Auswahl von Sprachnachrichten, die an ein Mobilgerät versendet oder von diesem Mobilgerät abgespielt werden, anhand des solcherart berechneten Rangwertes erfolgt. Durch diese Fortbildung wird es möglich, unter einer Vielzahl von Sprachnachrichten nur bestimmte Sprachnachrichten zur Übertragung oder Ausgabe bereitzustellen, so dass eine technisch sinnvolle Ausnutzung der zur Datenübertragung bereitstehenden Kapazitäten und der zur Ausgabe der Sprachnachrichten verfügbaren Mittel erreicht wird. Dabei ist zu verstehen, dass der Rangwert eines Sprachdateienpakets in regelmäßigen Abständen ermittelt und zugeordnet werden kann, oder dass dieser Rangwert erst im Zeitpunkt der Anforderung oder des Abspielens von Sprachnachrichten berechnet werden kann.

Dabei ist es weiterhin bevorzugt, dass aus einer Mehrzahl von Sprachdateienpaketen, deren inhaltsbezogene(s) Merkmal(e) mit dem/den anfordernden bzw. ausgabebezogenen Merkmal(en) übereinstimmen, eine vorbestimmte, insbesondere über eine Eingabe in das Mobilgerät vorbestimmbare Anzahl von Sprachdateipaketen versendet bzw. ausgegeben werden und diese Anzahl von Sprachdateienpaketen zwei Anteilen umfasst, wobei der erste Anteil aus Sprachdateienpaketen besteht, deren Erstellungsdatum nicht mehr als eine vorbestimmte Zeitspanne, insbesondere über eine Eingabe in das Mobilgerät vorbestimmbare Zeitspanne vor dem Zeitpunkt der Anforderung bzw. Wiedergabe liegt und der zweite Anteil aus Sprachdateipaketen besteht, die die höchsten Rangwerte haben. Mit dieser Fortbildung wird eine Nutzung der zur Verfügung stehenden Übertragungs- und Ausgabemittel bzw. Kapazitäten erreicht, die einerseits eine ausreichende Aktualität der Sprachnachrichten, andererseits eine ausreichende Qualität der Sprachnachrichten sicherstellt. Grundsätzlich ist zu verstehen, dass die rangwertbezogene Sortierung und Bereitstellung alternativ oder in Kombination mit einer geographischen Sortierung angewendet werden kann.

Gemäß einer weiteren bevorzugten Ausführungsform ist vorgesehen, dass ein Sprachdateipaket aus dem Speicher des Mobilgeräts nach einem Kriterium automatisch gelöscht wird, wobei das Kriterium aus einem oder einer Kombination der folgenden Kriterien gebildet wird: nach der Wiedergabe von dessen Sprachnachricht, nach Verstreichen einer vorbestimmten Zeitspanne, nach Überschreiten einer vorbestimmten Distanz zwischen einer durch eine geographische Positionsbestimmungsvorrichtung des Mobilgeräts ermittelten geographischen Position des Mobilgeräts und einer dem Sprachdateipaket zugeordneten geographischen Position, nach einer Benutzereingabe über eine Benutzerschnittstelle des Mobilgeräts, nach Überschreiten eines festgelegten Speichervolumens für die Summe der Sprachnachrichtenpakete oder Unterschreiten eines festgelegten freien Speichervolumens des Speichers des Mobilgeräts.

Wie zuvor erläutert, besteht insbesondere bei der sprachnachrichtenbezogenen Informationsübermittlung und Speicherung eine spezifische Problematik darin, den zur Verfügung stehenden Speicher auf einem Mobilgerät sinnvoll zu verwalten, wenn neben einer reinen Online-Abhör- und Wiedergabemöglichkeit auch eine Offline-Abhör- und Wiedergabemöglichkeit bereitgestellt werden soll. Des Weiteren ist es insbesondere bei der Möglichkeit eines wiederholten Abspielens von Sprachnachrichten wünschenswert, Sprachnachrichten auf dem wiedergebenden Mobilgerät zwischenzuspeichern, um eine wiederholte Datenübertragung der Sprachnachricht zu vermeiden. In diesem Fall treten jedoch Probleme hinsichtlich der Speicherverwaltung auf dem Mobilgerät auf, da bei mittel- oder längerfristiger Nutzung, bei intensiver Nutzung aber auch bereits im kurzfristigen Bereich, eine unerwünschte Speicherplatzbelegung mit Sprachnachrichten auftreten kann, die für den Benutzer von keiner Relevanz mehr sind oder zumindest von solcherart geringer Relevanz, dass eine Löschung erfolgen könnte. Eine manuelle Löschung durch den Benutzer selbst ist jedoch regelmäßig zu aufwändig und fehlerträchtig, um diese Problematik zufrieden stellend zu lösen. Erfindungsgemäß wird daher die Möglichkeit bereitgestellt, anhand ausgewählter Kriterien, welche den Sprachnachrichten innerhalb des jeweiligen Sprachnachrichtenpaketes zugeordnet sind, eine selektive und automatisierte Löschung der Sprachnachrichten zu erreichen. Dabei kann einerseits ein isoliertes Kriterium der zuvor beschriebenen Kriterien ausgewählt werden oder eine logische Verknüpfung dieser Kriterien ausgewählt werden. Diese logische Verknüpfung kann gemäß typischer Bool'scher Kriterien wie beispielsweise "und", "oder", "und nicht" verknüpft werden, um eine für den jeweiligen Benutzer geeignete Auswahl zu treffen. So ist es beispielsweise möglich, grundsätzlich Sprachnachrichten, welche ein positionsbezogenes Merkmal aufweisen, nach ihrer Wiedergabe und nach Überschreiten einer vorbestimmten Distanz des Mobilgeräts von der inhaltsbezogenen Positionsangabe der Sprachnachricht zu löschen. Auf diese Weise wird sichergestellt, dass beispielsweise dann, wenn das Mobilgerät auf einer längeren Reise über eine weite Strecke zahlreiche ortsbezogene Sprachnachrichten empfängt, diese den Speicher nicht überfüllen, sondern nach ihrer Wiedergabe und / oder bei absehbarer fehlender weiterer Relevanz wieder gelöscht werden.

Noch weiter ist es bevorzugt, dass jedes Sprachdateipaket eines oder mehrere der folgenden inhaltlich charakterisierenden Merkmale umfasst:
a) eine der Sprachnachricht zugeordnete geographische Positionsangabe,
b) eine der Sprachnachricht zugeordnete Uhrzeit,
c) eine der Sprachnachricht zugeordnete Dateigröße,
d) einen der Sprachnachricht zugeordneten Absender,
e) eine der Sprachnachricht zugeordnete Nachrichtenkategorie,
f) einen Rangwert der zuvor beschriebenen Weise
wobei die Merkmale gemäß a) - d) dem Sprachdateipaket vorzugsweise automatisch aus in dem Mobilgerät ermittelten Daten zugeordnet werden, und das Merkmal d) vorzugsweise aus einem in der Hardware des Mobilgeräts gespeicherten, unveränderbaren Identifikationscode generiert wird, und dass das anfordernde und/oder ausgabebezogene charakterisierende Merkmal eines oder eine Kombination der Merkmale gemäß a) - f) umfasst. Mit dieser Auswahl charakterisierender Merkmale, die sowohl als inhaltsbezogene als auch als anfordernde oder ausgabebezogene Merkmale erfindungsgemäß eingesetzt werden, wird eine gezielte Sortierung, Versendung und eine gezielte Abfrage, d.h. Empfang der erfindungsgemäß ausgebildeten Sprachdatenpakete ermöglicht und hierdurch eine gezielte Reduktion des Datenvolumens, welches versendet und gespeichert wird, erzielt. Dabei ist, wie zuvor, zu verstehen, dass die charakterisierenden Merkmale in bestimmter Weise logisch miteinander kombiniert werden können, um eine entsprechende Kombination zu erzielen.

Gemäß einer weiteren bevorzugten Ausführungsform ist vorgesehen, dass ein erstes Sprachdateipaket an das Mobilgerät gesendet bzw. von diesem empfangen und gespeichert wird; die Wiedergabe des ersten Sprachdateipakets auf dem Mobilgerät begonnen wird; während dieser Wiedergabe ein weiteres Sprachdateipaket auf das Mobilgerät gesendet bzw. von diesem empfangen und gespeichert wird; und die Versendung bzw. der Empfang und die Speicherung des mindestens einen weiteren Sprachdateipakets abgebrochen wird und bereits gespeicherte Anteile des mindestens einen weiteren Sprachdateipakets gelöscht werden, falls die Wiedergabe des ersten Sprachdateipakets durch eine Benutzereingabe in eine Benutzerschnittstelle vor dem Ende der Sprachdatei unterbrochen wird.

Wie zuvor erläutert, besteht eine grundsätzliche Problematik bei Sprachnachrichten darin, dass eine Parallelwiedergabe zwecks gezielter Auswahl durch den Benutzer nicht möglich bzw. unpraktikabel ist. Diese Problematik betrifft einerseits die Wiedergabe, wirkt sich jedoch unmittelbar auch auf die Versendung von Sprachnachrichten aus, wenn hierbei Sendezeiten, Datenvolumen und dgl. berücksichtigt werden sollten. Gemäß der bevorzugten Ausführungsform ist vorgesehen, dass in einem Fall, in dem aufeinander folgend mehrere Sprachdatenpakete aufgrund einer erfindungsgemäßen Auswahl eines anfordernden charakterisierenden Merkmals übersandt werden, zunächst das erste Sprachdatenpaket übermittelt wird, dieses dann unmittelbar nach Versendung, gegebenenfalls auch bereits während seiner Versendung auf dem Mobilgerät wiedergegeben wird und nach dieser begonnenen Wiedergabe erst das zweite Sprachdatenpaket zeitversetzt zum ersten versendet wird. Die Versendung dieses zweiten und gegebenenfalls weiterer Sprachdatenpakete wird dann gestoppt, sollte der Benutzer die Wiedergabe der ersten Sprachnachricht vor dessen regulärem Ende vorzeitig beenden, insbesondere eine vorbestimmte Zeitspanne oder länger vor dessen Ende beenden. Diese technische Umsetzung der sequenziellen Datenübertragung mit wahlweisem Abbruch macht sich zunutze, dass der Benutzer in diesem Fall bereits anhand der ersten übertragenen Sprachnachricht abschätzen kann, ob die angeforderten Sprachdatenpakete seinen Vorstellungen und Wünschen entsprechen, er also die anfordernden charakterisierenden Merkmale zutreffend gewählt hat. Ein vorzeitiges Abbrechen der ersten Sprachnachricht bei ihrer Wiedergabe wird hierbei vom System unmittelbar als Indiz für eine fehlende Relevanz der angeforderten Sprachdatenpakete gewertet und folglich auf eine Übermittlung weiterer Sprachdatenpakete unmittelbar verzichtet und die Löschung von Anteilen bereits geladener Sprachdatenpakete aus dem Speicher des Mobilgeräts veranlasst.

Noch weiter ist es bevorzugt, dass mehrere Sprachdateipakete zu einer Programmzeit als Datenblock über eine bestehende drahtlose Funkverbindungen an das Mobilgerät gesendet bzw. von diesem empfangen werden, auf diesem gespeichert werden und zu einem späteren Zeitpunkt bei nicht bestehender drahtloser Funkverbindung auf dem Mobilgerät ausgegeben werden.

Das erfindungsgemäße Verfahren ermöglicht es grundsätzlich, Sprachnachrichten in Echtzeit durch ein Mobilgerät von einem Servercomputer anzufordern und auf dem Mobilgerät wiederzugeben. Aufgrund der Speicherung der Sprachdatenpakete auf dem Mobilgerät ist jedoch ein besonderer Vorteil insbesondere auch die zeitversetzte Wiedergabe von Sprachnachrichten nach ihrem Versenden. So eröffnet das System auch grundsätzlich die vorteilhafte Möglichkeit, Sprachnachrichten, die in wiederkehrender Weise aufgrund festgelegter Suchkriterien vom Mobilgerät angefordert werden, stets zu festgelegten Programmzeiten an das Mobilgerät zu versenden, um diese dann zeitversetzt später auszugeben. Auf diese Weise ist es beispielsweise möglich, für solche wiederkehrende Sprachnachrichten Programmzeiten innerhalb eines Datenübertragungsnetzwerkes zu nutzen, zu welchen erfahrungsgemäß wenig Datenverkehr herrscht, um hierdurch eine zeitlich optimierte Ausnutzung der Datenübertragungskapazitäten des Netzwerks zu erzielen. Dabei kann insbesondere auch eine durch Benutzereingabe veranlasste Vorabspeicherung von Sprachnachrichten erfolgen, beispielsweise um vor einem Auslandsaufenthalt relevante Sprachnachrichten online zu laden und dann später offline zur Verfügung zu haben. Diese Ausgestaltung kann insbesondere mit der zuvor erläuterten Umgebungsbereich-gestützten Ladung und Wiedergabe von Sprachnachrichten kombiniert werden, beispielsweise um alle relevanten Sprachnachrichten, die für einen bestimmten Zielort oder Zielumgebungsbereich zur Verfügung stehen, vorab zu laden und diese später offline im Zielgebiet zur Verfügung zu haben.

Bei dem erfindungsgemäßen Verfahrensaspekt der merkmalssortierten Ausgabe von Sprachnachrichten auf einem Mobilgerät ist es weiterhin bevorzugt, wenn über eine Benutzerschnittstelle des Mobilgeräts ein oder mehrere ausgabebezogene charakterisierende Merkmale gemäß a) - e), wie zuvor beschrieben, eingegeben werden und Sprachdatenpakete, deren inhaltsbezogenen charakterisierenden Merkmalen diesen ausgabebezogenen charakterisierenden Merkmalen entsprechen, ohne eine vorherige Eingabe über die Benutzerschnittstelle ausgegeben werden und vor der Ausgabe aller anderen Sprachdatenpakete erst eine vorzugsweise graphische Anzeige zu deren Verfügbarkeit auf dem Mobilgerät angezeigt wird und diese Sprachnachrichten erst nach Eingabe einer Bestätigung über die Benutzerschnittstelle akustisch ausgegeben werden.

Grundsätzlich besteht bei der Ausgabe von Sprachnachrichten der Vorteil, dass sie vom Benutzer eines Mobilgeräts auch während anderer Tätigkeiten wahrgenommen werden können, d.h. beispielsweise während einer Fortbewegung in einem Verkehrsmittel wahrgenommen werden können oder sogar während eines laufenden Gesprächs zumindest insoweit wahrgenommen werden, als dass die Ausgabe einer Sprachnachricht erfolgt. Dies unterscheidet Sprachnachrichten im Hinblick auf ihre Präsentationsweise in technischer Hinsicht von beispielsweise Textnachrichten oder anderen graphisch ausgegebenen Nachrichten. Allerdings ist hierbei für einen Benutzer zu unterscheiden zwischen dem Wunsch, Sprachnachrichten unmittelbar und ohne vorherige Bestätigungsanfrage ausgegeben zu bekommen oder aber diese lediglich nach Erhalt eines Hinweises und Bestätigung des Hinweises ausgegeben zu bekommen. Das erfindungsgemäße Verfahren ermöglicht hier aufgrund der Möglichkeit einer Auswahl entsprechender Kriterien eine entsprechend selektive unmittelbare oder bestätigungsabhängige Ausgabe von Sprachnachrichten. So können bestimmte Sprachnachrichten anhand einer einzelnen oder kombinierten Auswahl logisch verknüpfter charakterisierender Merkmale unmittelbar ausgegeben werden, beispielsweise weil diese eine besondere Relevanz haben oder von besonderen Personen stammen, die der Benutzer bevorzugt abhören möchte, wohingegen andere Sprachnachrichten nur nach entsprechender Bestätigung des Benutzers, die über eine Benutzerschnittstelle des Mobilgeräts eingegeben wird, ausgegeben werden. Hierbei kann vorgesehen sein, dass diese zweite Gruppe von Sprachnachrichten einen entsprechenden visuellen oder akustischen Hinweis erzeugen, um den Benutzer auf die Verfügbarkeit einer solchen Sprachnachricht aufmerksam zu machen und eine entsprechende Bestätigung abzufragen.

Noch weiter ist es bevorzugt, dass ein Sprachdatenpaket eine Benutzereingabe abfragt oder eine Datenverbindung zu einem Computer herstellt, der eine Benutzereingabe abfragt und dass dabei vorzugsweise vor Eingabe der Benutzereingabe in das Mobilgerät oder vor deren Versendung das Mobilgerät mit dem Servercomputer oder einem anderen Computer Daten austauscht, die einen Zahlungsvorgang bewirken. Grundsätzlich besteht in bestimmten Anwendungen die Problematik, neben der Übersendung einer Sprachnachricht eine Abfrage einer Information in Abhängigkeit dieser Sprachnachricht durchzuführen. Diese Problematik wird erfindungsgemäß dadurch gelöst, dass nach Wiedergabe einer Sprachnachricht eine entsprechende Information vom Benutzer abgefragt wird und diese dann entsprechend versendet wird. Dabei ist es, einerseits um eine kommerzielle Nutzung solcher Informationsabfragen durchführen zu können, andererseits aber auch um die Seriosität von auf solche Weise gegebenen Auskünften und eingeholten Informationen sicherzustellen, in vielen Anwendungen wünschenswert, den eine solche Information abgebenden Benutzer daran zu hindern, diese Informationen in sinnloser Weise abzugeben. Dies wird erfindungsgemäß erreicht, indem die Informationsabgabe für den Benutzer zwingend mit einer Zahlung verknüpft ist. Auf diese Weise können beispielsweise seriöse Informationseinholungen erzielt werden, indem Benutzer, die lediglich die Verfälschung einer solchen Informationseinholung und Befragung zum Ziel haben, von der einfachen oder mehrfachen Abgabe von Fehlinformationen abgehalten werden, da dies für den Benutzer mit erheblichen Kosten verbunden wäre.

Noch weiter ist es bevorzugt, wenn ein erstes Sprachdatenpaket ein inhaltlich charakterisierendes Merkmal umfasst, welches einen Verweis auf ein zweites Sprachdatenpaket darstellt und dass nach dem ersten Sprachdatenpaket das zweite Sprachdatenpaket versendet bzw. ausgegeben wird und auf diese Weise eine zusammenhängende Versendung und/oder Ausgabe von mehreren aufeinander folgenden Sprachdateien erfolgt. Mit dieser Fortbildungsform wird es ermöglicht, dass Sprachnachrichten nicht nur jeweils isoliert aufgrund sie charakterisierender inhaltsbezogener Merkmale vergleichbar und somit sortierbar bzw. gezielt wiedergebbar sind, sondern darüber hinaus auch aus mehreren solcher Sprachnachrichten ein zeitlich aufeinander folgender Sprachnachrichtentext erstellt werden kann, indem die Sprachnachrichten aufeinander verweisen. Dabei kann jeweils eine Sprachnachricht auf eine ihr nachfolgende Sprachnachricht verweisen oder darüber hinaus Hinweise auf weitere nachfolgende Sprachnachrichten, gegebenenfalls alle relevanten nachfolgenden Sprachnachrichten enthalten, um eine sinnvolle Verwaltung des Speichervolumens und Datentransfervolumens zu ermöglichen. Auf diese Art und Weise kann ein Datenstrom erzeugt werden, der sequenziell geladen und wiedergegeben wird, um zusammenhängende Sprachnachrichten wiedergeben zu können. Dies hat insbesondere dann einen Sinn, wenn, wie generell für Sprachnachrichten wünschenswert, diese einer bestimmten Zeitbeschränkung unterliegen, beispielsweise einer vorbestimmten maximalen Sprachnachrichtendauer von 12 Sekunden oder 30 Sekunden, um auf diese Weise auch die Aufnahme und Wiedergabe längerer Sprachinformationen in mehreren aufeinander folgenden, jeweils zeitlich beschränkten Sprachnachrichten zu ermöglichen.

Ein weiterer Aspekt der Erfindung ist ein Datenverarbeitungsprogramm zur Ausführung auf einem Computer bzw. einem Mobilgerät, welches bewirkt, dass der Computer/das Mobilgerät ein Verfahren nach einem der vorstehenden Ansprüche ausführt, wenn das Programm darauf ausgeführt wird.

Weiterhin kann die Erfindung umgesetzt werden in einem Computer bzw. einem Mobilgerät, welches mit einem solchen Datenverarbeitungsprogramm ausgerüstet ist.

Dabei kann es insbesondere vorgesehen sein, ein solches Mobilgerät mit einem solchen Datenverarbeitungsprogramm fortzubilden, indem es vorzugsweise Folgendes umfasst:
- eine Dateneingabeschnittstelle zum Empfang akustischer Eingaben,
- eine Datenausgabeschnittstelle zur Ausgabe akustischer Sprachdaten,
- eine Positionsbestimmungsvorrichtung zur Bestimmung der geographischen Position des Mobilgeräts,
- eine Dateneingabeschnittstelle zur Eingabe von Textdaten und/oder
- eine Datenausgabeschnittstelle zur Ausgabe graphischer Daten.

Das erfindungsgemäße Verfahren bzw. die mit einer Software zur Ausführung des erfindungsgemäßen Verfahrens ausgerüsteten Mobilgeräte erlaubt es folglich insbesondere, eine Sprachdatei aufzunehmen, diese mit einem Empfänger, insbesondere aus einer Kontaktdatentabelle zu versehen, an das Mobilgerät dieses Empfängers zu versenden und hierbei wiederum dem Empfänger der Sprachnachricht zu ermöglichen, die Sprachnachricht auf seinem Mobilgerät abzuhören und hierauf mit einer weiteren Sprachnachricht an den ursprünglichen Absender zu antworten. Dabei wird die Sprachnachricht vorzugsweise über einen Computerserver versendet und kann hierdurch auch an eine Gruppe von Personen versendet werden und folglich Konferenzfunktionen erfüllen. Besonders bevorzugt ist dabei, dass die Sprachmitteilungen mit einem charakterisierenden Merkmal in Form einer geografischen Positionsangabe versehen werden können und folglich auf einer graphischen Ausgabe einer geografischen Umgebung die Verfügbarkeit von Sprachnachrichten zu bestimmten geografischen Positionen entsprechend durch ein Symbol angezeigt werden kann, um diese abrufbar zu machen. Dabei ist es weiterhin bevorzugt, dass die Sprachdatei auch auf einem Mobilgerät in Abhängigkeit von dessen geografischer Position in Bezug auf die geographische Positionsangabe, die der Sprachnachricht zugeordnet ist, wiedergegeben werden kann und hierbei insbesondere eine vom Benutzer wählbare Distanz einstellbar ist, ab dessen Unterschreitung die Wiedergabe auf dem Mobilgerät erfolgt. Die Unterschreitung dieser eingestellten Distanz kann einerseits die Übertragung der Sprachnachricht von einem Computerserver auf das Mobilgerät auslösen, andererseits oder zusätzlich auch dessen Ausgabe auf dem Mobilgerät.

Eine bevorzugte Ausführungsform wird anhand der beiliegenden Figuren beschrieben. Es zeigen:
- Fig. 1: eine schematische Darstellung des erfindungsgemäßen Verfahrensablaufs,
- Fig. 2: eine schematische Darstellung eines erfindungsgemäßen Verfahrensablaufs am Beispiel des Durchlaufens einer bestimmten geographischen Position,
- Fig. 3: eine beispielhafte Darstellung einer Benutzerschnittstelle für das erfindungsge- mäße Verfahren,
- Fig. 4: eine beispielhafte Darstellung einer ein Sprachdatenpaket repräsentierenden Benutzerschnittstelle für das erfindungsgemäße Verfahren, und
- Fig. 5: eine schematische Darstellung einer Benutzerschnittstelle in der Anwendung einer sortierten Wiedergabe von Sprachnachrichten in einer darstellungsbezo- genen geographischen Positionierung.
- Fig. 6 bis 9: weitere beispielhafte Visualisierungen der Benutzerschnittstelle für das erfindungsgemäße Verfahren.

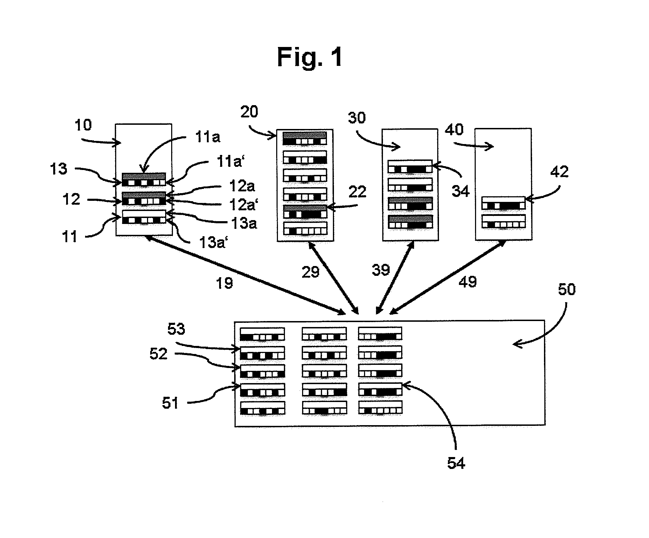

Bezug nehmend zunächst auf Fig. 1 sind vier Mobilgeräte 10, 20, 30, 40 dargestellt. Jedes der vier Mobilgeräte 10 - 40 kommuniziert mit einem Servercomputer 50, um mit diesem Sprachdatenpakete auszutauschen.

Auf dem Mobilgerät 10 sind drei Sprachdatenpakete 11, 12, 13 gespeichert. Von diesen drei Sprachdatenpaketen sind zwei Sprachdatenpakete 11, 12 auf dem Mobilgerät 10 erstellt worden und entlang einer Übertragungsstrecke 19 an den Servercomputer 50 übertragen worden, um dort für andere Benutzer bereitgestellt zu werden. Das dritte Sprachdatenpaket 13 wurde über die Datenübertragungsstrecke 19 vom Servercomputer 50 an das Mobilgerät 10 gesendet und von diesem empfangen.

Jedes Sprachdatenpaket 11, 12, 13 besteht aus einer Sprachdatei 11a, 12a, 13a und einem Datenblock 11a', 12a', 13a', der mehrere charakterisierende Merkmale aufweist, was in Fig. 1 durch eine entsprechende Unterteilung schematisch dargestellt ist. Es ist zu verstehen, dass die mehreren charakterisierenden Merkmale grundsätzlich durch binäre Daten dargestellt werden, hierdurch aber durchaus differenzierte Merkmalsbeschreibungen enthalten können. So kann ein charakterisierendes Merkmal beispielsweise in einer Kategoriesortierung bestehen, die eine Sprachdatei in unterschiedliche Kategorien wie beispielsweise "Hotelbeschreibung", "Sport-Event", "Verkehrsnachricht", "private Nachricht", und dgl. zuordnen kann. Ein weiteres charakterisierendes Merkmal kann in einer geographischen Positionsangabe bestehen, die durch einen Längen- und Breitengrad dargestellt wird.

In gleicher Weise sind auch auf den Mobilgeräten 20, 30, 40 Sprachdatenpakete gespeichert, die einerseits von dem Mobilgerät aus erstellt und versendet wurden über entsprechende Datenübertragungsstrecken 29, 39, 49 oder über diese Datenübertragungsstrecken vom Servercomputer 50 empfangen worden sind.

Wie aus der beispielhaften Darstellung zu erkennen ist, wurde ein Sprachdatenpaket 22 mit bestimmten inhaltsbezogenen charakterisierenden Merkmalen erstellt und an den Servercomputer 50 versendet und dort als Sprachdatenpaket 54 gespeichert. Dieses Sprachdatenpaket 54 wurde durch einen Anforderungsbefehl der Mobilgeräte 30 und 40, welches anfordernde charakterisierende Merkmale umfasst, die den inhaltsbezogenen charakterisierenden Merkmalen dieses Sprachdatenpakets 54 entsprechen, angefordert und entsprechend mittels der Datenübertragungsstrecken 39, 49 an die Mobilgeräte 30, 40 übertragen und dort entsprechend als jeweilige Sprachdatenpakete 34, 42 gespeichert. Auf diesen Mobilgeräten 30, 40 kann demzufolge, wenn weiterhin ein Ausgabevorgang aufgrund insoweit übereinstimmender ausgabebezogener charakterisierender Merkmale durchgeführt wird, die entsprechende Sprachdatei des Sprachdatenpakets 34, 42 ausgegeben und vom entsprechenden Benutzer gehört werden.

Dabei ist zu verstehen, dass nicht notwendigerweise zu diesem Zweck das anfordernde charakterisierende Merkmal, welches die Datenübertragung vom Servercomputer auf das Mobilgerät veranlasst, vollkommen übereinstimmend mit dem ausgabebezogenen charakterisierenden Merkmal, welches die Ausgabe der gespeicherten Sprachdatei auf dem Mobilgerät veranlasst, übereinstimmen muss. Stattdessen ist es lediglich erforderlich, dass das anfordernde charakterisierende Merkmal oder die entsprechende Merkmalskombination des Servercomputers 30 bzw. 40 mit den inhaltsbezogenen charakterisierenden Merkmalen der entsprechenden Sprachdatenpakete soweit übereinstimmt, dass hierdurch ein Übertragungsvorgang ausgelöst wird, darauf folgend jedoch gegebenenfalls andere ausgabebezogene charakterisierende Merkmale wiederum mit den inhaltsbezogenen Merkmalen des Sprachdatenpakets soweit übereinstimmen, dass ein Ausgabevorgang ausgelöst wird.

In bestimmten Einstellungen kann dabei auch vorgesehen sein, dass eine zu einer Datenübertragung eines Sprachdatenpakets führende Übereinstimmung zwischen anfordernden und inhaltsbezogenen charakterisierenden Merkmalen zu einer unmittelbaren Ausgabe auf dem Mobilgerät führt, nachdem das Sprachdatenpaket übertragen wurde, so dass in diesem Fall eine weitere Filterung und Bestätigung mittels eines ausgabebezogenen charakterisierenden Merkmals entfällt.

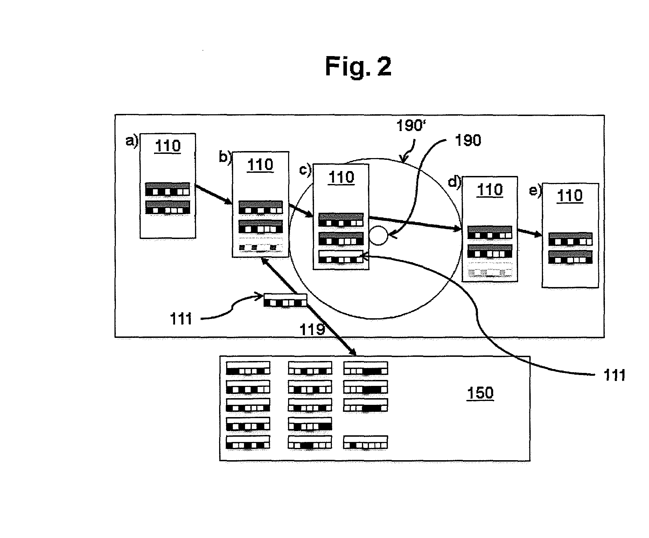

Fig. 2 zeigt den schematischen Verlauf eines einzigen Mobilgeräts 110, welches sich durch einen geographischen Raum 100 bewegt und hierbei einen Point of Interest 190 durcheilt. Das Mobilgerät 110 bewegt sich zunächst von einer Position a) in eine Position b), in der es in einer vorbestimmten Distanz 190' um den Point of Interest 190 sich befindet. Mittels eines in das Mobilgerät 110 integrierten GPS-Sensors wird diese Position über eine Datenübertragungsstrecke 119 an einen Servercomputer 150 gesendet. Zugleich ist das Mobilgerät 110 solcherart programmiert, dass mit der Versendung eines solchen anfordernden charakterisierenden Merkmals in Form der Positionsangabe ein durch weitere anfordernde, charakterisierende Merkmale gebildetes Profil versendet wird, welches in diesem Fall aus der Kombination "Hotelempfehlung" UND > "3-Sterne" ODER "Verkehrsnachricht" besteht.

Dieses Anforderungsprofil wird durch ein Sprachdatenpaket 111 erfüllt, welches in dem Moment, in dem das Mobilgerät 110 in den Distanzkreis 190' eintritt, folglich über eine Datenübertragungsstrecke 119 von dem Servercomputer 150 auf das Mobilgerät 110 übertragen wird. Dort wird das Sprachdatenpaket gespeichert und während des weiteren Eintretens c) in Richtung des Point of Interest 190 unmittelbar abgespielt, um dem Benutzer des Mobilgeräts die Information wiederzugeben. Diese Information wurde zuvor von einem anderen Benutzer des erfindungsgemäßen Verfahrens eingegeben, typischerweise zu einem Zeitpunkt, wo er den Point of Interest mit seinem Mobilgerät aufsucht und hierzu eine beschreibende Sprachnachricht eingegeben und mit den entsprechenden inhaltsbezogenen charakterisierenden Merkmalen versehen und an den Servercomputer 150 gesendet hat.

Nach Durchlaufen der Distanz 190' und Verlassen dieses Bereichs um den Point of Interest 190 erfasst das Mobilgerät 110 an der Position d), dass die ausgabebezogenen charakterisierenden Merkmale, welche für die laufende Ausgabe definiert sind, von dem Sprachdatenpaket 111 nicht weiter erfüllt sind und löscht dieses Sprachdatenpaket folglich aus dem Speicher des Mobilgeräts 110. Das Mobilgerät 110 setzt seine Bewegung dann weiter fort e) in einem Speicherzustand, der demjenigen vor Eintritt in den Bereich um den Point of Interest 190 entspricht.

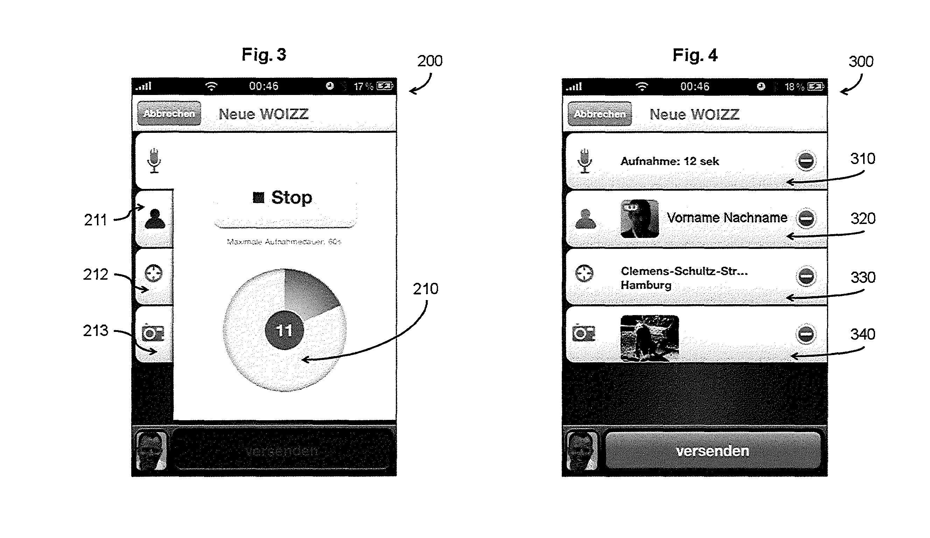

Fig. 3 zeigt eine Benutzerschnittstelle zur Aufnahme einer Sprachnachricht auf einem Mobilgerät 200. Dargestellt ist der Vorgang der Aufnahme einer Sprachnachricht. Hierbei wird durch ein graphisches, als sich füllender Kreis ausgebildetes Balkendiagramm 210 die bereits verstrichene und noch verbleibende Zeit für eine Sprachnachricht dem Benutzer signalisiert, um eine effiziente Ausnutzung der limitierten Dauer von 60 Sekunden einer Sprachnachricht für das erfindungsgemäße Verfahren zu ermöglichen. Nach Ablauf dieser Zeit oder Beendigung der Spracheingabe vor Ablauf der Zeit wird die Sprachnachricht erneut dem Benutzer vorgespielt, damit dieser deren Inhalt kontrollieren kann. Hiernach kann der Benutzer mittels der Benutzerschnittstelle die Sprachnachricht mit verschiedenen inhaltsbezogenen charakterisierenden 211 - 213 Merkmalen versehen, beispielsweise indem er die Sprachnachricht einer Kategorie zuordnet, der Sprachnachricht eine geographische Position 212 zuordnet, beispielsweise die von einem integral im Mobilgerät enthaltenen GPS-Sensor zum Zeitpunkt der Aufnahme detektierte geographische Position oder indem er der Sprachnachricht ein Bild 213 zuordnet. Die Sprachnachricht wird dann weiterhin mit einer Absendercodierung versehen und der Absender hat die Möglichkeit, die Sprachnachricht an eine einzelne Person aus seiner Kontaktliste zu versenden oder eine Gruppe von Personen aus seiner Kontaktliste auszuwählen oder diese Sprachnachricht öffentlich zugänglich zu machen, um sie jedem Teilnehmer am Sprachnachrichtensystem gemäß der Erfindung zugänglich zu machen.

Fig. 4 zeigt eine graphische Darstellung einer einzelnen Sprachnachricht auf einer Benutzerschnittstelle eines Mobilgeräts 300. Zu erkennen ist, dass in einem ersten Feld 310 eine Information über die Aufnahmedauer der Sprachnachricht enthalten ist, in einem darunter liegenden Feld 320 der Absender der Sprachnachricht erkennbar ist, in einem wiederum darunter liegenden Feld 330 eine geographische Positionsangabe zur Sprachnachricht enthalten ist, in einem wieder darunter liegenden Feld 340 ein der Sprachnachricht zugeordnetes Bild als Thumbnail abgebildet ist. Ferner besteht die Möglichkeit in einem wiederum darunter liegenden Feld eine Kategoriezuordnung der Sprachnachricht wiederzugeben. Auf diese Weise kann mit einem schnellen Blick auf die graphische Benutzerschnittstelle des Mobilgeräts vom Benutzer entschieden werden, ob er diese Sprachnachricht abhören will, um deren Information aufzunehmen.

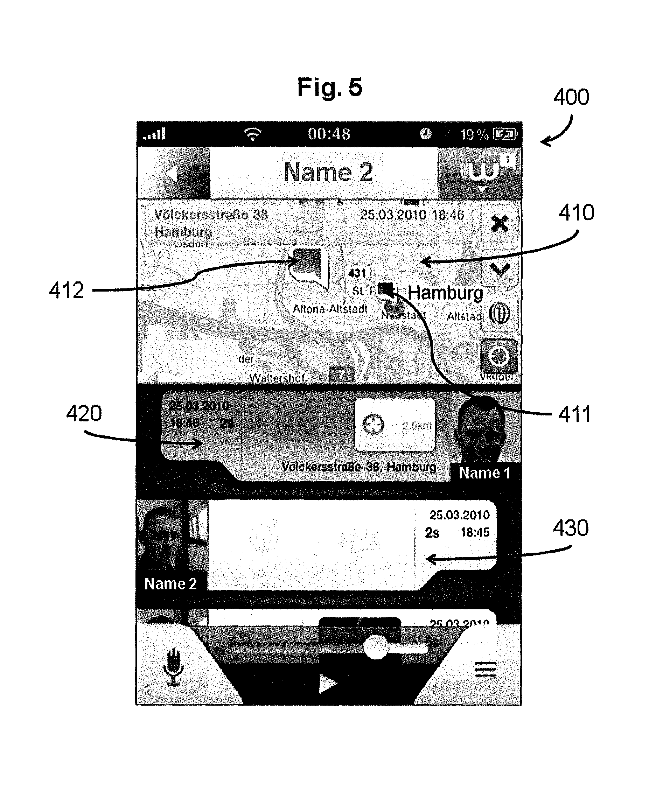

Schließlich zeigt Fig. 5 eine Nutzungssituation des erfindungsgemäßen Verfahrens für die Wiedergabe mehrerer Sprachnachrichten aus geographischen Positionsmerkmalen. In einem oberen Feld 410 einer graphischen Benutzerschnittstelle des Mobilgeräts ist eine Karte abgebildet, welche einen Ausschnitt eines Stadtplans zeigt, in dem insgesamt zwei Sprachnachrichten verfügbar sind, gekennzeichnet durch die Bezugszeichen 411 - 412.

Aufgrund der Auswahl des Fensters hat der Benutzer den ihn umgebenden Bereich ausgewählt und hierdurch bestimmt, dass alle in diesem Bereich verfügbaren Sprachnachrichten wiedergegeben werden. Der Benutzer selbst befindet sich mit seinem Mobilgerät hierbei in der Mitte des graphisch wiedergegebenen Kartenbereichs. Die Wiedergabe beginnt mit der ihm nächstliegenden Sprachnachricht 412, die gegenüber der anderen Sprachnachricht 411 deshalb vergrößert dargestellt ist. Der Benutzer sieht weiterhin in einem darunter liegenden Feld 420 die inhaltsbezogenen charakterisierenden Merkmale zu der soeben wiedergegebenen Sprachnachricht 412 und in einem wiederum darunter liegenden Feld 430 die darauf folgende, nächstliegende Sprachnachricht, welche nach Ablauf der vorhergehenden Sprachnachricht 412 abgespielt wird.

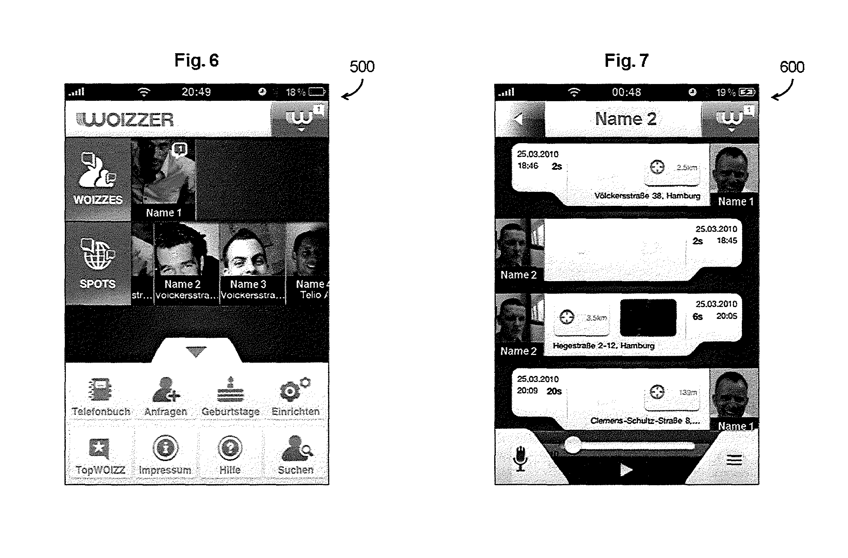

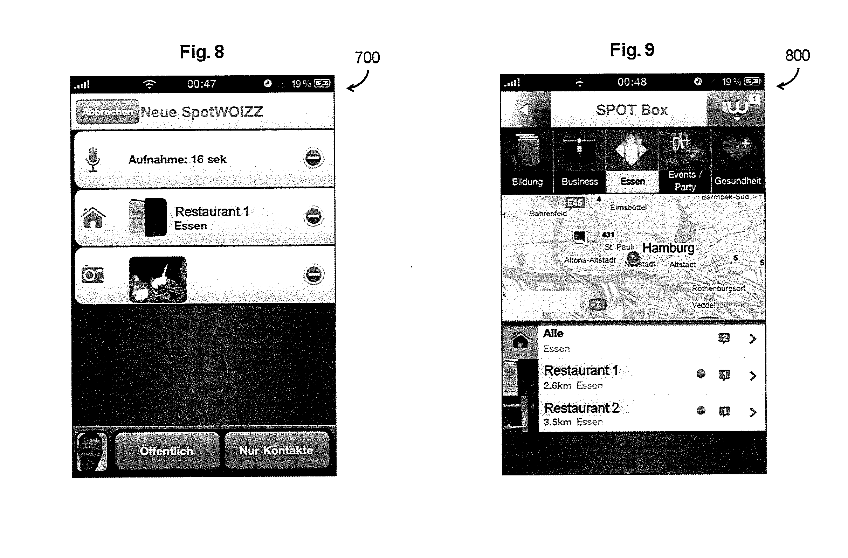

Weitere Visualisierungen einer Benutzerschnittstelle für das erfindungsgemäße Verfahren sind in den Figuren 6 bis 9 dargestellt. Dabei zeigt Figur 6 die Darstellung neuer Point-of-Interest-bezogenen Sprachnachrichten, Figur 7 eine Übersicht über den Mitteilungsverlauf zwischen den Benutzern "Name 1" und "Name 2". Figur 8 zeigt die Möglichkeit, Point-of-Interest-bezogene Sprachnachrichten vollständig öffentlich oder nur den eigenen Kontakten zugängig zu machen. Schließlich zeigt Figur 9 eine kategoriebezogene Kartendarstellung.

## Patentansprüche

1. Verfahren zum Empfangen, Verwalten und Versenden einer Mehrzahl von nutzerbezogenen Sprachdateien auf einem Servercomputer mit den Verfahrensschritten:
Empfangen eines nutzerbezogenen Sprachdateipakets auf dem Servercomputer von einem ersten Mobilgerät, das zur Aufnahme von Sprache und zur Codierung der Sprache in eine Sprachdatei ausgebildet ist, wobei das Sprachdateipakt codierte akustische Sprachsignale enthält;
Speichern des nutzerbezogenen Sprachdateipakets auf dem Servercomputer;
Empfangen eines Anforderungssignals, welches ein anforderndes charakterisierendes Merkmal enthält, auf dem Servercomputer von einem zweiten Mobilgerät,
nach Erhalt des Anforderungssignals Versenden des nutzerbezogenen Sprachdateipakets von dem Servercomputer an das zweite Mobilgerät zur
Speicherung in einem Speicher dieses Mobilgeräts;
**dadurch gekennzeichnet, dass**
das Sprachdateipaket weiterhin zumindest ein inhaltsbeschreibendes charakterisierendes Merkmal enthält,
der Servercomputer das inhaltsbeschreibende charakterisierende Merkmal auswertet und mit dem anfordernden charakterisierenden Merkmal vergleicht, und
das nutzerbezogene Sprachdateienpaket an das zweite Mobilgerät in Abhängigkeit des Ergebnisses der Auswertung und des Vergleichs des inhaltsbeschreibenden mit dem anfordernden charakterisierenden Merkmal versendet wird.

2. Verfahren zum Aufnehmen, Verwalten und Ausgeben einer Mehrzahl von Sprachdateien auf einem Mobilgerät, mit den Verfahrensschritten:
a) Erstellen von individuellen Sprachdateipaketen mittels:
Aufnehmen einer individuellen Sprachdatei mittels einer Aufnahmeschnittstelle auf dem Mobilgerät;
Zuordnen eines inhaltsbezogenen charakterisierenden Merkmals zu der Sprachdatei,
Erstellen eines individuellen Sprachdateipakets aus der individuellen Sprachdatei und dem inhaltsbezogenen charakterisierenden Merkmal auf dem Mobilgerät, und
Versenden des individuellen Sprachdateipakets von dem Mobilgerät an den Servercomputer; und
b) Ausgeben von Sprachdateipaketen mittels:
Senden eines anfordernden charakterisierenden Merkmals von dem Mobilgerät an einen Servercomputer;
Empfangen einer Mehrzahl von Sprachdateipaketen auf dem Mobilgerät von einem Servercomputer, wobei jedes Sprachdateipaket eine Sprachdatei und
ein dem anfordernden charakterisierenden Merkmal zugeordnetes inhaltsbeschreibendes charakterisierendes Merkmal enthält;
Speichern der Mehrzahl von Sprachdateipaketen in einem Speicher des Mobilgeräts;
Einspeisen eines ausgabebezogenen charakterisierenden Merkmals in das Mobilgerät;
Auswerten des inhaltsbezogenen charakterisierenden Merkmals auf dem Mobilgerät und
Erstellen einer Reihenfolge der Mehrzahl von Sprachdateipaketen anhand eines Vergleichs des inhaltsbezogenen charakterisierenden Merkmals mit dem ausgabebezogenen charakterisierenden Merkmal auf dem Mobilgerät;
Zeitlich aufeinanderfolgendes Wiedergeben der Sprachdateien der Mehrzahl von Sprachdateipaketen in der erstellten Reihenfolge über eine akustische Ausgabevorrichtung des Mobilgeräts;

3. Verfahren nach einem der vorstehenden Ansprüche,
**dadurch gekennzeichnet, dass**
als anforderndes und/oder als ausgabebezogenes charakterisierendes Merkmal eine geographische Positionsangabe über eine Benutzerschnittstelle des Mobilgeräts eingegeben wird oder mittels einer geographischen Positionsbestimmungsvorrichtung des Mobilgeräts ermittelt wird, das inhaltliche charakterisierende Merkmal von Sprachdateipaketen, die auf dem Servercomputer gespeichert bzw. von diesem empfangen werden, eine geographische Positionsangabe darstellt;
die Sprachdateipakete an das Mobilgerät übertragen bzw. auf dem Mobilgerät akustisch wiedergegeben werden, wenn eine vordefinierte Distanz zwischen der geographischen Positionsangabe des anfordernden bzw. ausgabebezogenen charakterisierenden Merkmals und der geographischen Positionsangabe des inhaltlich charakterisierenden Merkmals des jeweiligen Sprachdateipakets unterschritten wird.

4. Verfahren nach Anspruch 3,
**dadurch gekennzeichnet, dass**
ein Umgebungsbereich über eine graphische Wiedergabeeinheit des Mobilgeräts ausgegeben wird;
die Größe des ausgegebenen Umgebungsbereichs über eine Benutzerschnittstelle skalierbar ist; und
alle Sprachdateipakete an das Mobilgerät übertragen bzw. auf dem Mobilgerät akustisch wiedergegeben werden, deren geographische Positionsangabe des inhaltlich charakterisierenden Merkmals des jeweiligen Sprachdateipakets innerhalb des solcherart skaliert ausgegebenen Umgebungsbereichs liegt,
wobei vorzugsweise die Sprachdateipakete in ihrer aufsteigenden Distanz von der geographischen Positionsangabe, die über die Benutzerschnittstelle des Mobilgeräts eingegeben wurde oder mittels der geographischen Positionsbestimmungsvorrichtung des Mobilgeräts ermittelt wurde, in eine Reihenfolge sortiert werden, und in dieser Reihenfolge übertragen bzw. wiedergegeben werden.

5. Verfahren nach einem der vorstehenden Ansprüche,
**dadurch gekennzeichnet, dass** einem Sprachdateipaket weiterhin ein Rangwert zugeordnet wird, der berechnet wird, indem aus folgenden Faktoren:
- der seit dem Erstellungszeitpunkt der Sprachnachricht vergangenen Zeitspanne,
- der Anzahl der Speichervorgänge, mit denen das Sprachdateipaket auf weiteren Mobilgeräten nach Abrufen des Sprachdateipakets gespeichert wurde,
- der Anzahl der Weiterleitungsvorgänge, mit denen das Sprachdateienpaket durch ein Mobilgerät an ein anderes Mobilgerät gesendet wurde,
- ein dem Absender des Sprachdateipakets zugeordneter persönlicher Rangfaktor, welcher sich aus der Höhe der Rangwerte der bisher von diesem Absender erstellten Sprachdateienpakete errechnet,
zumindest zwei, vorzugsweise drei oder alle vier in einer vorbestimmten Gewichtung zueinander addiert werden, und
eine Reihenfolge oder Auswahl von Sprachnachrichten, die an ein Mobilgerät versendet oder von diesem Mobilgerät abgespielt werden, anhand des solcherart berechneten Rangwertes erfolgt.

6. Verfahren nach dem vorstehenden Anspruch 5,
**dadurch gekennzeichnet, dass** aus einer Mehrzahl von Sprachdateienpaketen, deren inhaltsbezogene(s) Merkmal(e) mit dem/den anfordernden bzw. ausgabebezogenen Merkmal(en) übereinstimmen, eine vorbestimmte, insbesondere über eine Eingabe in das Mobilgerät vorbestimmbare Anzahl von Sprachdateipaketen versendet bzw. ausgegeben werden und diese Anzahl von Sprachdateienpaketen zwei Anteilen umfasst, wobei der erste Anteil aus Sprachdateienpaketen besteht, deren Erstellungsdatum nicht mehr als eine vorbestimmte Zeitspanne, insbesondere über eine Eingabe in das Mobilgerät vorbestimmbare Zeitspanne vor dem Zeitpunkt der Anforderung bzw. Wiedergabe liegt und der zweite Anteil aus Sprachdateipaketen besteht, die die höchsten Rangwerte haben.

7. Verfahren nach einem der vorstehenden Ansprüche,
**dadurch gekennzeichnet, dass** ein Sprachdateipaket aus dem Speicher des Mobilgeräts nach einem Kriterium automatisch gelöscht wird, wobei das Kriterium aus einem oder einer Kombination der folgenden Kriterien gebildet wird:
- Nach der Wiedergabe von dessen Sprachnachricht,
- Nach Verstreichen einer vorbestimmten Zeitspanne,
- Nach Überschreiten einer vorbestimmten Distanz zwischen einer durch eine geographische Positionsbestimmungsvorrichtung des Mobilgeräts ermittelten geographischen Position des Mobilgeräts und einer dem Sprachdateipaket zugeordneten geographischen Position,
- Nach einer Benutzereingabe über eine Benutzerschnittstelle des Mobilgeräts
- Nach Überschreiten eines festgelegten Speichervolumens für die Summe der Sprachnachrichtenpakete oder Unterschreiten eines festgelegten freien Speichervolumens des Speichers des Mobilgeräts.

8. Verfahren nach einem der vorstehenden Ansprüche,
**dadurch gekennzeichnet, dass** jedes Sprachdateipaket eines oder mehrere der folgenden inhaltlich charakterisierenden Merkmale umfasst:
a) Eine der Sprachnachricht zugeordnete geographische Positionsangabe,
b) Eine der Sprachnachricht zugeordnete Uhrzeit,
c) Eine der Sprachnachricht zugeordnete Dateigröße,
d) Einen der Sprachnachricht zugeordneten Absender,
e) Eine der Sprachnachricht zugeordnete Nachrichtenkategorie,
f) Einen Rangwert gemäß Anspruch 5,
wobei die Merkmale gemäß a)-d) dem Sprachdateipaket vorzugsweise automatisch aus in dem Mobilgerät ermittelten Daten zugeordnet werden, und das Merkmal d) vorzugsweise aus einem in der Hardware des Mobilgeräts gespeicherten, unveränderbaren Identifikationscode generiert wird,
und dass das anfordernde und/oder ausgabebezogene charakterisierende Merkmal eines oder eine Kombination der Merkmale gemäß a)-f) umfasst.

9. Verfahren nach einem der vorstehenden Ansprüche,
**dadurch gekennzeichnet, dass**
ein erstes Sprachdateipaket an das Mobilgerät gesendet bzw. von diesem empfangen und gespeichert wird;
Die Wiedergabe des ersten Sprachdateipakets auf dem Mobilgerät begonnen wird;
während dieser Wiedergabe ein weiteres Sprachdateipaket auf das Mobilgerät gesendet bzw. von diesem empfangen und gespeichert wird; und
die Versendung bzw. der Empfang und die Speicherung des mindestens einen weiteren Sprachdateipakets abgebrochen wird und bereits gespeicherte Anteile des mindestens einen weiteren Sprachdateipakets gelöscht werden, falls die Wiedergabe des ersten Sprachdateipakets durch eine Benutzereingabe in eine Benutzerschnittstelle vor dem Ende der Sprachdatei unterbrochen wird.

10. Verfahren nach einem der vorstehenden Ansprüche, **dadurch gekennzeichnet, dass** mehrere Sprachdateipakete zu einer Programmzeit als Datenblock über eine bestehende drahtlose Funkverbindungen an das Mobilgerät gesendet bzw. von diesem empfangen werden, auf diesem gespeichert werden und zu einem späteren Zeitpunkt bei nicht bestehender drahtloser Funkverbindung auf dem Mobilgerät ausgegeben werden.

11. Verfahren nach einem der vorstehenden Ansprüche 2-10, **dadurch gekennzeichnet, dass** über eine Benutzerschnittstelle des Mobilgeräts ein oder mehrere ausgabebezogene charakterisierende Merkmale gemäß a)-f) in Anspruch 8 eingegeben werden und
- Sprachdatenpakete, deren inhaltsbezogenen charakterisierenden Merkmalen diesen ausgabebezogenen charakterisierenden Merkmalen entsprechen ohne eine vorherige Eingabe über die Benutzerschnittstelle ausgegeben werden und
- vor der Ausgabe aller anderen Sprachdatenpakete erst eine vorzugsweise graphische Anzeige von deren Verfügbarkeit auf dem Mobilgerät angezeigt wird und diese erst nach Eingabe einer Bestätigung über die Benutzerschnittstelle ausgegeben werden.

12. Verfahren nach einem der vorstehenden Ansprüche, **dadurch gekennzeichnet, dass** ein Sprachdatenpaket eine Benutzereingabe abfragt oder eine Datenverbindung zu einem Computer herstellt, der eine Benutzereingabe abfragt und dass dabei vorzugsweise vor Eingabe der Benutzereingabe in das Mobilgerät oder vor deren Versendung das Mobilgerät mit dem Servercomputer oder einem anderen Computer Daten austauscht, die einen Zahlungsvorgang bewirken.

13. Verfahren nach einem der vorstehenden Ansprüche, **dadurch gekennzeichnet, dass** ein erstes Sprachdatenpaket ein inhaltlich charakterisierendes Merkmal umfasst, welches einen Verweis auf ein zweites Sprachdatenpaket darstellt und dass nach dem ersten Sprachdatenpaket das zweite Sprachdatenpaket versendet bzw. ausgegeben wird und auf diese Weise eine zusammenhängende Versendung und/oder Ausgabe von mehreren aufeinanderfolgenden Sprachdateien erfolgt.

14. Datenverarbeitungsprogramm zur Ausführung auf einem Computer bzw. einem Mobilgerät, welches bewirkt, dass der Computer/das Mobilgerät ein Verfahren nach einem der vorstehenden Ansprüche ausführt, wenn das Programm darauf ausgeführt wird.

15. Computer bzw. Mobilgerät mit einem Datenverarbeitungsprogramm nach Anspruch 14.

16. Mobilgerät mit einem Datenverarbeitungsprogramm nach Anspruch 14, welches vorzugsweise folgendes umfasst:
- eine Dateneingabeschnittstelle zum Empfang akustischer Eingaben,
- eine Datenausgabeschnittstelle zur Ausgabe akustischer Sprachdaten,
- eine Positionsbestimmungsvorrichtung zur Bestimmung der geographischen Position des Mobilgeräts,
- eine Dateneingabeschnittstelle zur Eingabe von Textdaten und/oder
- eine Datenausgabeschnittstelle zur Ausgabe graphischer Daten.
